# EUROPEAN PATENT SPECIFICATION

(11) **EP 0 330 351 B1**
(45) Date of publication and mention of the grant of the patent: **12.05.1993**
(21) Application number: 89301330.0
(22) Date of filing: 13.02.1989
(51) Int. Cl.: C01B 21/44

(54) **Processes for concentrating nitric acid**
Verfahren zur Konzentrierung der Salpetersäure
Procédé pour la concentration d'acide nitrique

(30) Priority: 22.02.1988 US 163492
(43) Date of publication of application: 30.08.1989
(73) Proprietor: Guenkel, Alfred Alexander, Vancouver, B.C., Canada V6G 2S6 (CA)
(72) Inventor: Guenkel, Alfred Alexander, Vancouver, B.C., Canada V6G 2S6 (CA)
(74) Representative: Horner, Martin Grenville

(56) References cited:
- FR-A- 904 009
- FR-A- 1 395 310
- CHEMIE-ING.-TECHN., no. 21, 1974, pages 894-899; D. GERICKE: "Konzentrieren von Salpetersäure mit Schwefelsäure"
- CHEMICAL ABSTRACTS, vol. 86, no. 12, 1977, page 158, Columbus, Ohio, US; J.G. SLOAN: "The extractive distillation process for nitric acid concentration using magnesium nitrate", & ADV. CHEM. SER. 1976, 155(THERMODYN. BEHAV. ELECTROLYTES MIXED SOLVENTS, SYMP., 1975), 128-42

## Description

### Field of the Invention

This invention is concerned with improvements in or relating to a process for the concentration of nitric acid, and especially to such process with which continuous operation is facilitated by the direct coupling of the concentration of the nitric acid with the reconcentration of the dehydrating agent.

### Background of the Invention

Nitric acid is produced industrially in large volumes through the oxidation of ammonia in air over a catalyst, usually platinum, and the subsequent absorption of the nitrogen oxides in water. The "weak" nitric acid produced in such a process normally has a strength of about 55% to 65% HNO₃, the balance being water. It is not possible to concentrate this acid through simple distillation beyond about 68% HNO₃, since an azeotrope exists at that concentration. "Strong" nitric acid of strength of above 95% HNO₃ is required in some important industrial processes, such as certain nitration and oxidation processes, and to obtain nitric acid of this strength dehydrating agents are commonly employed which "break" the azeotrope. Dehydrating agents function by preferrentially "binding" the water leaving the vapor above the solution rich in nitric acid. It is known that normally a minimum proportion of the dehydrating agent is needed to "break" the azeotrope.

The use of sulfuric acid as a dehydrating agent in nitric acid concentration is well established, but many other dehydrating agents have been proposed and a number have found commercial application. Examples of dehydrating agents described and claimed in the patent literature are calcium nitrate and magnesium nitrate (U.S. Patent No. 864,217 to R. Wolfenstein and O. Boeters); magnesium nitrate (U.S. Patent No. 2,463,453 to A. P. Beardsley); and lithium nitrate (U.S. Patent No. 3,433,718 to A. W. Yodis). To facilitate the following discussion in the text of the specification, but not in the claims, employment of sulfuric acid as the dehydrating agent is assumed, unless the contrary is stated.

In a simple batch distillation process of a suitable mixed acid consisting of sulfuric acid, nitric acid and water, as nitric acid is removed by vaporization from the mixed acid its weight fraction in the liquid phase decreases while that of water increases. This results in the progressive decline in the strength of the nitric acid vapor produced until recovery becomes uneconomical. Compared to batch distillation the economy of nitric acid concentration and its recovery are greatly improved if the mixed acid is passed countercurrently through a packed column with steam rising from the bottom, as disclosed for example in U.S. Patent No. 1,031,864 to H. Pauling. The steam condenses as it rises in the column thereby vaporizing nitric acid from the mixed acid. Strong nitric acid is obtained as vapor at the top of the column, while boiling sulfuric acid of about 68% to 72% H₂SO₄, containing only traces of nitric acid, is discharged at the bottom. The live steam injected into the column supplies the energy for the process in an economical manner, i.e. the heat to vaporize the nitric acid and the heat required to bring the sulfuric acid to its boiling point, but it also dilutes the sulfuric acid and thus increases the amount of "strong" sulfuric acid required for the process. This is because the strength of the spent sulfuric acid at the bottom of the column must not be allowed to drop much below 68% H₂SO₄. If the spent sulfuric acid is allowed to drop below this strength, an increasing amount of nitric acid will stay with this spent sulfuric acid and will ultimately be lost as this spent sulfuric acid is reconcentrated. The reason for this is that the dehydrating capacity of sulfuric acid decreases rapidly as the spent sulfuric acid strength falls below 68% H₂SO₄.

"Live steam" usage can be reduced if the nitric and sulfuric acids are fed separately into the concentration column, so that the heat of mixing between these two acids is released within the column; such a process has been disclosed in U.S. Patent No. 1,074,287 to H. Pauling. It is possible to avoid "live steam" injection altogether by using steam heated boiling tubes, as disclosed in U.S. Patent No. 1,895,012 to S. F. Spangler. The benefits of indirect heating are, however, only of marginal value since the energy requirements of the nitric acid concentration process are relatively low, particularly if the heat of mixing is liberated within the column. Moreover, although it is preferred to avoid dilution of the sulfuric acid for the reason given above, the dilution due to "live steam" injection is relatively small since most of the water absorbed by the sulfuric acid comes from the water that enters the process with the "weak" nitric acid. In modern nitric acid concentration plants energy requirements are normally met by steam heated boiling tubes (which are usually of high corrosion resistant and expensive metal such as tantalum) often in conjunction with some "live steam" injection. Air injection into the bottom of the concentration column is also practiced, and has the effect of lowering temperatures throughout the column. A review of industrial practice of nitric acid concentration is given in a paper by D. Gericke in Chemie Ingenieur Technik, Volume 21/74, pages 894 - 899.

Passing of the sulfuric and nitric acids into the concentration column at the proper strengths and in the proper mass ratio is important for efficient use of sulfuric acid and for good yield of nitric acid, but it is by itself not a guarantee that "strong" nitric acid will be produced and that the spent sulfuric acid will contain only small amounts of residual nitric acid; the energy requirements of the process must also be met exactly. Energy input in excess of process requirements through the boiling tubes or through "live steam" injection could lead to a situation where nitric acid of a strength below that specified is produced, while the strength of the spent sulfuric acid increases above the normal operating range of 68% -72% H₂SO₄. This is because steam is forced up through the concentration column and leaves with the nitric acid vapor at the top of the column thereby diluting the "strong" nitric acid. Insufficient energy input could lead to a situation where "strong" nitric acid might be produced, but where part of the nitric acid stays with the spent sulfuric acid; the spent sulfuric acid is said to be not properly denitrated. The operation of a nitric acid concentration column requires good control of the acid feed rates into the concentration column and of the energy supplied to the process. In industrial practice process conditions are commonly monitored by recording tops and bottoms temperatures of the concentration column in addition to process feed rates and energy input to the process. The composition of the product "strong" nitric acid and of the spent sulfuric acid are also monitored.

The strength of the nitric acid produced in a nitric acid concentrator is commonly controlled in one of two ways, namely by refluxing part of the concentrated "strong" nitric acid to the top of the column or by injecting "strong" sulfuric acid into the column at an elevation above that of the "weak" nitric acid feed point. Only a small amount of reflux of "strong" nitric acid is required, and this reflux converts the top of the nitric acid concentration column into an enriching section operated above the azeotrope of nitric acid. The injection of the "strong" sulfuric acid at an elevation above that of the "weak" nitric acid feed point puts the sulfuric acid of highest concentration, which exhibits the highest relative volatility for nitric acid, into contact with the "strong" nitric acid vapor discharged at the top of the concentration column. However, in commercial practice ideal equilibrium conditions are far from being reached, and in many plants control of the strength of the product "strong" nitric acid is achieved through a combination of the above two methods. Refluxing of part of the "strong" nitric acid has the additional benefit of condensing and collecting trace quantities of sulfuric acid vapor.

At the bottom of the column the strength of the spent sulfuric acid must be kept in the range of about 68% to 72% H₂SO₄. A lowering of this strength, which would be obtained if the "strong" sulfuric acid feed rate into process is reduced in relation to the "weak" nitric acid feed rate, will lead to unacceptably high levels of nitric acid in the spent sulfuric acid, and that constitutes a yield loss. The reason for this loss in nitric acid is the fact that the relative volatility of nitric acid decreases rapidly if the strength of the spent sulfuric acid is allowed to drop below a strength of about 68% H₂SO₄. For a column of a given packing height a decrease in the spent sulfuric acid strength leads to a higher residual nitric acid level in the spent acid, even if the energy input is adequate. An increase in the steam rate to process does not necessarily help the situation since the spent sulfuric acid could be further diluted. It is quite possible, through energy input in excess of the process requirements and through improper feed rates to process, to produce nitric acid of unacceptably low strength, while at the same time producing a spent sulfuric acid containing high levels of residual nitric acid.

A major expense in nitric acid concentration is the disposal or reconcentration of the spent sulfuric acid. If sulfuric acid is used on a once-through basis, then storage facilities must be provided for the strong and the spent sulfuric acids, and further expenses are incurred in shipping them. Moreover, the once-through approach ties the nitric acid concentration plant to sulfuric acid supply and disposal facilities. On the other hand, sulfuric acid reconcentration and recycle of this acid in a closed sulfuric acid loop is an energy intensive process, in that not only must the water absorbed by the spent sulfuric acid be removed through vaporization, but in that an amount of energy equivalent to the heat of mixing must be provided. The availability of the heat of dilution or the heat of mixing in the nitric acid concentration column makes this part of the process a relatively low energy consumer, but the penalty is paid in the sulfuric acid reconcentration process, where an equivalent amount of energy must be supplied to again separate sulfuric acid and water by preferentially boiling off the water. Furthermore, there is little opportunity for energy recovery since both the spent sulfuric acid produced in the nitric acid concentration column and the "strong" sulfuric acid discharged from a vacuum sulfuric acid concentrator are at about the same high temperature. The reconcentrated "strong" sulfuric acid must be cooled before being recycled to the nitric acid concentration column, since feed of the hot acid could cause excessive energy input to the nitric acid concentration column with consequences already discussed. Cooling of the sulfuric acid anywhere in the sulfuric acid loop implies that energy is rejected from the process, which must again be re- supplied somewhere else in the process. To make matters worse, this energy transfer in the process must usually be implemented using very expensive tantalum equipment. Steam requirements for the nitric acid reconcentration process including sulfuric acid concentration are given in the above-mentioned paper by Gericke as 3.5 tons of steam per ton of "strong" nitric acid for the case of a feed nitric acid of 55% HNO₃. In processes where the sulfuric acid is used on a once-through basis, the requirements of "strong" sulfuric acid are of the order of 2.5 tons per ton of nitric acid; this latter figure varies somewhat depending on the strengths of the feed "weak" nitric acid and of the "strong" sulfuric acid used in the process.

The focus of most prior art has been on the development of an efficient nitric acid concentration process, and the associated problem of sulfuric acid reconcentration has been relatively neglected. Sulfuric acid has a high boiling point as compared with nitric acid and reconcentration of sulfuric acid is notoriously difficult. For this reason, the use of 80% H₂SO₄ in place of the commercial 94% H₂SO₄ is advocated in U.S. Patent No. 1,074,287 (also to H. Pauling), since reconcentration to 80% H₂SO₄ is much easier than to 94% H₂SO₄, mainly because of the lower boiling point of the former. Even when concentration is carried out under vacuum relatively high temperatures are necessary, requiring the use of high pressure steam in the boiling tubes and of expensive corrosion resistant heat transfer surfaces.

French Patent Specification No. 1, 395,310, issued 15th May 1964, discloses a process for the concentration of nitric acid above the azeotropic value by use of a dehydrating agent such as sulfuric acid, the process being carried out in a column in which the sulfuric and nitric acids are introduced at different levels, the resultant concentrated nitric acid vapor being discharged from the top of the column. The diluted sulfuric acid that reaches the bottom of the column is at least partially neutralised with ammonia, and the heat energy thus released is usable to vaporize the water that was introduced with the nitric acid. In one embodiment the nitric acid is introduced into the column at a lower level in vapor form and at a higher level in liquid form.

### Definition of the invention

It is an object of the present invention to provide a new continuously operable process for the concentration of nitric acid by employment of a dehydrating agent, and by including concurrent reconcentration of the dehydrating agent.

The present invention provides a process for an integrated concentration of nitric acid in a column by use of a dehydrating agent and reconcentration of the dehydrating agent, the process comprising the steps of:
a) splitting a feed stream of an aqueous solution of weak nitric acid to be concentrated to result in a larger fraction and a smaller fraction;
b) vaporizing at least the larger nitric acid fraction to result in a larger nitric acid vapor fraction;
c) directly contacting the larger nitric acid vapor fraction with a first portion of the dehydrating agent in a column to bind the water therefrom and result in a concentrated vapor stream of nitric acid and a diluted stream of said first portion of the dehydrating agent;
d) mixing the smaller fraction of the weak nitric acid and a second portion of the dehydrating agent;
e) contacting the concentrated vapor stream of nitric acid in the column with the mixture resulting from step (d) to result in a more concentrated vapor stream of nitric acid and a diluted stream of said second portion of the dehydrating agent;
f) condensing the more concentrated nitric acid vapor stream from step (e) to obtain a condensed more concentrated nitric acid;
g) boiling the diluted streams of said first and second portions of the dehydrating agent from steps (c) and (e) to remove nitric acid therefrom and to produce spent dehydrating agent; and
h) collecting, reconcentrating and recirculating the spent dehydrating agent of step (g) for use in steps (c) and (d).

The process allows the energy requirement to be substantially reduced as compared with prior art processes.

Preferably, the liquid dehydrating agent is an aqueous solution of sulfuric acid, or of magnesium nitrate.

Preferably also, the process includes the further step of:
i) contacting the more concentrated vapor stream of nitric acid from step e) with a third portion of the dehydrating agent to remove part of the residual water vapor from said more concentrated vapor stream of nitric acid.

Preferably also, the process includes the further step of:
j) refluxing condensed "strong" nitric acid from step f) to contact said more concentrated vapour stream of nitric acid of step i) to collect part of the residual amount of water vapor from said more concentrated vapor stream of nitric acid and of part of the dehydrating agent carried in said more concentrated vapor stream or nitric acid.

The spent dehydrating agent of step g) may be reconcentrated without further energy input either in a vacuum equilibriumflash concentrator, or in an evaporative cooler concentrator using air.

Preferably, at least steps c), e), g) and i) are effected in a single column and the reconcentrated dehydrating agent is fed to the column in three portions at three respective separate locations to be used respectively in steps c), e) and i).

### Description of the Drawings

Particular preferred embodiments of the invention will now be described, by way of example, with reference to the accompanying schematic drawings, wherein:
FIGURE 1 illustrates a first embodiment of the invention and the apparatus required for its implementation;
FIGURE 2 is a similar drawing to illustrate a second embodiment of the invention; and
FIGURE 3 is a triangular diagram illustrating the ternary system of nitric acid, sulfuric acid and water and the vapor composition above the mixture.

### Description of the Preferred Embodiments

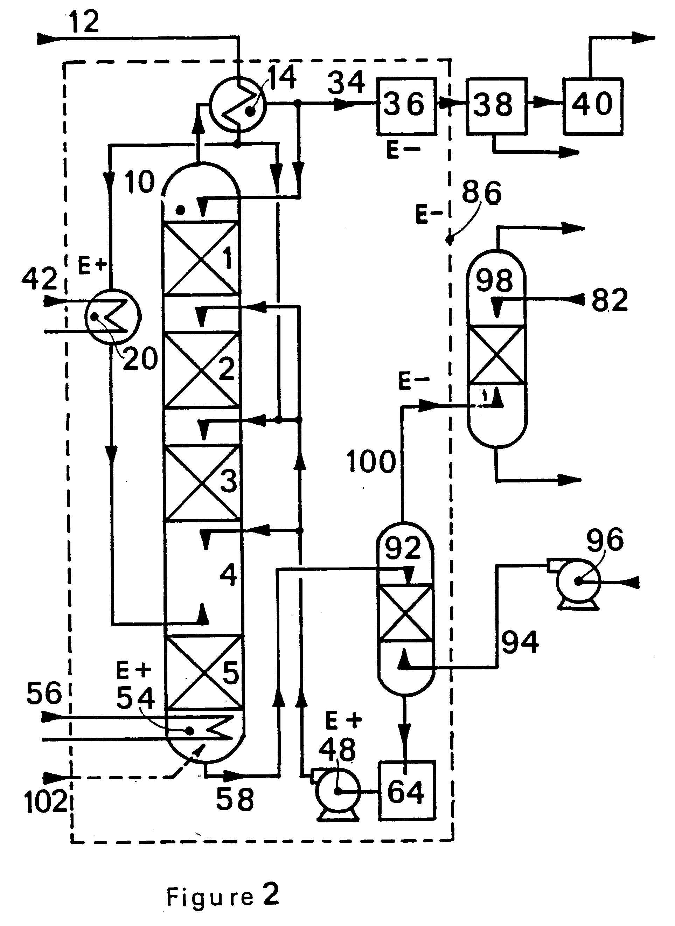

Referring now to Figure 1 the process which is a first embodiment of the invention is carried out in a vertical nitric acid concentration column 10, which effectively comprises five separate functional sections 1 through 5, numbered sequentially from top to bottom. The feed consisting of the "weak" nitric acid is fed from pipe 12 through a preheater 14 and is then divided at junction 16 into a larger fraction (usually about 51% to 99% by weight) that flows through pipe 18 to a nitric acid vaporizer 20, and thence through pipe 22 to nozzle 24 of condenser section 4 of the column. A smaller fraction flows from the junction 16 through pipe 26 to junction 28 and thence to nozzle 30 of section 3 of the column whose function will be described below. The nitric acid vapor moves upward in the column and the resultant hot, concentrated "strong" nitric acid vapor exits via pipe 32 to the preheater 14 where it is cooled and partially condensed while preheating the incoming feed "weak" nitric acid, the resultant mixture of liquid and vapor then passing via outlet pipe 34 to the condenser 36, bleacher 38 and fume absorber 40 also employed in conventional processes. The condenser 36, where "strong" nitric acid vapor not condensed in preheater 14 is finally condensed, constitutes a source of heat rejection from the process, which is so indicated by the sign E-. The vaporizer 20 constitutes a heat (energy) input element to the system and is so indicated by the symbol E+; the heat is in this embodiment provided by means of low pressure steam supplied to the vaporizer by pipe 42. A small reflux stream (usually about 0.1% to 10% by weight of the production rate) of the concentrated "strong" nitric acid is recycled from the pipe 34 via pipe 44 to nozzle 46 at the top of the column to control the strength of the exiting nitric acid vapor by preferentially condensing water vapor from the nitric acid vapor stream ascending inside the column and also to capture any traces of the dehydrating agent carried in the "strong" nitric acid vapor stream passing through section 1 of the column 10.

The dehydrating agent employed in this embodiment of the process is sulfuric acid (preferably between 71% and 79% by weight) and the sulfuric acid loop through the apparatus is established by the sulfuric acid pump 48, which also acts as an energy input to the system and is also therefore indicated by the symbol E+. Reconcentrated "strong" sulfuric acid from the pump outlet is supplied via pipe 50 to three separate sections of the column, the first portion (usually about 51% to 99% by weight) being fed to nozzle 52 of condenser section 4, while a second portion (usually about 1% to 49% by weight) is fed to junction 28 to mix with the preheated liquid nitric acid in a predetermined ratio and to discharge through nozzle 30 into section 3. A third portion (usually about 1% to 20% by weight) is fed to nozzle 53 of section 2 where it functions as a slip stream to collect residual water vapor from the upwardly moving "strong" nitric acid vapor stream. The spent sulfuric acid at the bottom of the column 10 is boiled by a column reboiler 54 supplied with high pressure steam via pipe 56; the reboiler is another source of energy input to the system and is indicated by the symbol E+. Nitric acid and water are vaporized in this reboiler to strip the mixed acid flowing through section 5 of column 10 and to return nitric acid to the condenser section 4 of the column 10.

The hot dilute spent sulfuric acid from the bottom of the column passes through pipe 58 to an equilibrium flash concentrator 60, the reconcentrated "strong" sulfuric acid passing through pipe 62 to a pump tank 64 and thence to the inlet of pump 48. The hot water vapor from the flash concentrator passes via pipe 66 to a barometric condenser 68, which is operated under vacuum, and where the hot water vapor is condensed through contact with cooling water. The condensed water and the circulating cooling water then pass to a seal tank 70, to a pump 72 and to nozzle 74 of a cooling tower 76. The cooled water at the foot of the cooling tower is fed by main cooling water pump 78 and pipe 80 back to the condenser 68, purge water being bled from the water circuit as required through pipe 82. Energy is removed from the process through the cooling water recycled from the cooling tower 76 to the condenser and this is indicated by the symbol E- at the inlet of pipe 66 to the condenser 68. A stream of an alkaline solution, usually caustic soda, is injected into the condensed water loop from pipe 83 to neutralize any trace amounts of nitric and sulfuric acids that enter the water loop through carry-over in the equilibrium flash concentrator. A portion (usually about 1 % to 90 % by weight) of the reconcentrated sulfuric acid can be recycled through pipe 84 back to the equilibrium flash concentrator 60 to mix in the transfer line 58 with the boiling spent sulfuric acid from column 10 so as to drop the temperature of the sulfuric acid in line 58. This prevents undue flashing of the sulfuric acid in the transfer line 58 as the pressure to which this acid is subjected changes from essentially atmospheric pressure in the column section 5 to vacuum in the equilibrium flash concentrator 60.

In broad terms the operation of the process is that in section 4 of the column the bulk of the nitric acid, converted to vapor form by the vaporizer 20, is brought into contact with the bulk (the first portion) of the reconcentrated circulating sulfuric acid. This part of the column can therefore be considered to be acting as a direct contact condenser. Most of the energy from the vaporized nitric acid solution is absorbed into the sulfuric acid cycle in this section by preferentially condensing water vapor. The sulfuric acid descending to section 5 will contain a certain amount of nitric acid, approaching equilibrium with the feed nitric acid vapor; the boiling of this acid in the reboiler of section 5 will return most of this nitric acid to section 4, as described above. The ascending nitric acid vapor out of section 4, estimated to be of strength in the range 65% to 90% by weight, is contacted in section 3 with the mixture of feed "weak" nitric acid and a second portion of the reconcentrated "strong" sulfuric acid, the two being mixed in junction 28 in a predetermined ratio such that the vapors in equilibrium with this mixed acid consist mostly of nitric acid, to produce a "strong" nitric acid vapor, estimated to be of strength in the range 85% to 96% by weight, as will be described in more detail below. In section 2 the strong nitric acid vapor emerging from section 3 is contacted with a third portion of the reconcentrated "strong" sulfuric acid to ensure that essentially only strong nitric acid vapor (estimated to be of strength 95% to 98% HNO₃) can escape at the top of the column; this process is continued in section 1 where also trace amounts of sulfuric acid carried in the "strong" nitric acid vapour stream are condensed and trapped and where residual amounts of water vapor are preferentially condensed, as described above, by use of a minor reflux stream of condensed "strong" nitric acid. The operation of section 1 is employed to control the strength of the product "strong" nitric acid, as in prior art processes.

The broken line 86 of Figure 1 delineates a "control" volume enclosing the elements of the process apparatus that must be considered in determining the overall energy balance of the system to ensure effective operation, as described above. The feed "weak" nitric acid crosses this boundary as liquid to the preheater 14 and then passes to the nitric acid vaporizer 20 where it receives energy through steam pipe 42. Energy supplied to the reboiler 54 through steam pipe 56 will ultimately vaporize the liquid "weak" nitric acid portion in the pipe 26. The reflux of "strong" nitric acid to the nozzle 46 is minimal, as indicated above. The energy loss E- via the water vapor leaving the flash concentrator through pipe 66 has been described above. The condenser 36 constitutes the second principal source of energy rejection and is indicated by E-. The entire process is of course subject to convective heat losses, indicated by the symbol E- designated for the broken line 86, and these convective heat losses are compensated partially through the energy input to the sulfuric acid circulation pump 48. The power input to this pump is ultimately dissipated into heat, indicated by the symbol E+. The overall energy balance is best visualized noting that liquid "weak" nitric acid enters through pipe 12, that water vapor leaves through pipe 66 and that "strong" nitric acid leaves through pipe 34 to be condensed in condenser 36. The energy required is provided through the vaporizer 20 and the reboiler 54. Part of the flow in pipe 34 will be in liquid form due to condensation of nitric acid in the preheater 14.

The processes of the invention are characterized in that the concentration of the nitric acid and the reconcentration of the sulfuric acid are integrated and coupled and effectively no energy is rejected from the sulfuric acid circulation loop through unnecessary cooling. It is a feature of the invention that it involves complete integration and coupling of the two sub-processes of nitric acid concentration and of sulfuric acid reconcentration in a single unit. It is of course the prime objective of the process to concentrate the nitric acid as economically as possible, the unavoidable reconcentration of the sulfuric acid is implemented to best serve this prime objective. Another feature of the preferred processes is the choice of the location where energy is applied to the process. Thus, by vaporizing a large part of the "weak" nitric acid feed a significant part of the energy requirements of the process are met in this step and, due to the low boiling point of "weak" nitric acid, can be met using low pressure steam, which frequently is available at industrial sites as waste steam. Direct process coupling of the nitric acid concentration and of the sulfuric acid reconcentration eliminates the need for substantial sulfuric acid storage. A result of the low hold-up requirements of sulfuric acid is a process in which a sulfuric acid inventory corresponding to not more than 10 minutes circulation of sulfuric acid is quite adequate.

As described above, in my new nitric acid concentration process the feed "weak" nitric acid is divided into two parts, the larger part being vaporized and sent into the nitric acid concentration column as vapor while the other part is mixed with a portion of the "strong" sulfuric acid in the liquid phase at junction 28. The preferred form of the nitric acid concentration column consist of 5 functional parts. The first top packed section uses reflux "strong" nitric acid to control "strong" nitric acid product strength by preferentially condensing water vapor, and to trap traces of sulfuric acid carried in this vapor stream. In the second section a small stream of reconcentrated "strong" sulfuric acid (the third portion) is injected through nozzle 53 where it will be in contact with "strong" nitric acid vapor, condensing part of it and condensing preferentially water vapor present at that point, thereby producing as overheads "strong" nitric acid of about 95% - 98% HNO₃; water vapor will be present at that point of the column due to the vapor pressure of the reconcentrated "strong" sulfuric acid. In section 3 a mixed acid is injected through nozzle 30 containing the part of the feed "weak" nitric acid which has not been vaporized and a fraction (the second portion) of the circulating reconcentrated "strong" sulfuric acid; these two acids are mixed in such a proportion that the vapor above the mix contains about 85% to 98% HNO₃. The mixed acid entering through nozzle 30 will be rich in nitric acid and will be close to its boiling point as will be further explained below. Section 4 acts as a direct contact condenser where the bulk of the recirculated sulfuric acid meets the "weak" nitric acid vapor generated in the nitric acid vaporizer and condenses part of this vapor. If nitric acid of 65% HNO₃ is vaporized in the nitric acid vaporizer, then the mixed acid present inside the column will condense part of this acid until equilibrium compositions are approached, which usually corresponds to a level of about 2.5% HNO₃ by weight in the mixed acid at the bottom of this condenser section. In the bottom section 5 the mixed acid present in this part of the column is denitrated, i.e. stripped free of nitric acid, by reboiling. It is important to match the overall sulfuric acid circulation rate to the overall "weak" nitric acid feed rate, while the split of the sulfuric acid into at least three separate portions is important for controlling the strength of the "strong" nitric acid produced. It is also important to provide the proper amount of energy input to the process by vaporizing the nitric acid and by reboiling the spent sulfuric acid. If the energy input is not properly matched to the production rate, then "strong" nitric acid of a strength outside specification limitations or spent sulfuric acid still containing residual nitric acid will be produced, as described above.

The spent sulfuric acid discharged from the bottom of the column is sent directly to the vacuum flash concentrator (or its equivalent) where it is reconcentrated without further energy input by flashing under vacuum. The amount of water flashed in the concentrator must be equal to the amount of water entering the process with the "weak" nitric acid. The temperature of the sulfuric acid drops from the boiling temperature at the bottom of the column (close to atmospheric pressure) to the vacuum boiling temperature in the flash concentrator. This temperature drop, usually of about 65°C, provides the energy required for vaporization of water in the equilibrium flash concentrator. The sulfuric acid circulation rate in relation to the nitric acid production rate is considerably larger than in conventional processes so that the difference in strength between the spent "strong" sulfuric acid and the reconcentrated "strong" sulfuric acid is correspondingly smaller, only about 3.2 percentage points. The reconcentrated "strong" sulfuric acid is recycled without any cooling to the column where it is again ready to absorb an amount of water equal to the amount which has been removed by flashing in the equilibrium flash concentrator. The spent sulfuric acid typically will have a strength of about 72% H₂SO₄, while the reconcentrated "strong" sulfuric acid has a strength of about 75.2% H₂SO₄. Some deviation from these target values can be tolerated. However, operation at lower sulphuric acid strength would require generally more packing height in the column since the relative volatility of nitric acid decreases with decreasing sulphuric acid strength, while higher sulfuric acid strengths will lead to higher operating temperatures in the nitric acid concentration column which will ultimately cause problems in the selection of the materials of construction.

A principal advantage of the process is the extent to which it becomes possible to eliminate rejection of heat anywhere in the process. As already pointed out above, any heat rejected from process must be resupplied elsewhere in the sulfuric acid loop. In this context the proper control of nitric acid strength produced at the top of the column by the process, without the need for excessive reflux of nitric acid in section 1, is important. Thus, if escape of water is avoided at the top of the column, then all water entering with the nitric acid will be absorbed by the circulating sulfuric acid. The overall energy balance for the process is simple, in that the nitric acid and its associated water enter the process as a liquid; the liquid feed "weak" nitric acid will ultimately be vaporized in the vaporizer 20 or by reboiling in the bottom of the column through reboiler 54. "Strong" nitric acid vapor leaves the process as overheads from the column partially condensing in the preheater and water vapor is flashed in the vacuum concentrator 60, the total of the two streams being equal to the total stream of "weak" nitric acid entering the process. No substantial quantity of energy is lost or rejected from the process, energy losses due to convective heat losses from the process are only a small fraction of the overall energy input, and are partially compensated for by the energy input through the sulfuric acid circulation pump 48.

A principal benefit of the new processes is that the energy requirements are much lower than these of existing processes when the energy requirements for sulfuric acid reconcentration is included in the total calculation. The energy requirements are approximately equal to the energy required to vaporize the nitric acid, which is about 1.05 tons of steam for 1 ton of 100% nitric acid in the case where the strength of the "weak" nitric acid is 65% HNO₃. Lower strength feed "weak" nitric acid will require a somewhat higher energy input since more water is present in the weaker feed nitric acid. A second benefit of the process is that a large part of the energy requirements are met by vaporizing feed "weak" nitric acid where low pressure steam is adequate and where the use of expensive tantalum heaters or heat exchangers is not required. Compared to once-through sulfuric acid processes the costs for sulfuric acid storage and for shipping are of course saved. The estimated energy requirement for the process may be contrasted with the usual figure for known processes of the order of 1.65 tons of steam per ton of nitric acid to result in a saving of about 0.60 ton of steam per ton of concentrated "strong" nitric acid. An average large plant operates with an acid capacity of about 100 tons per day resulting in a total steam saving of about 60 tons per day. The above consumption figures and savings are approximate only, precise data will depend on design details such as energy recovery effectiveness and the strength of the feed "weak" nitric acid.

By comparison a well established integrated plant for nitric acid concentration employing sulfuric acid has a cooler in the sulfuric acid loop, which constitutes a heat rejection from the system and this cooler is not required for the processes of the invention. It also employs a heat exchanger to preheat the "weak" nitric acid feed and to recover as much heat as possible; this heat exchanger is also not required. In a well established process a condenser is provided to condense the concentrated nitric acid product. This again constitutes heat rejection while in the new processes part of this heat is recovered in the nitric acid preheater.

The main process control loops required in my new process are the pressure control in the vacuum sulfuric acid concentrator through which the strength and the temperature of the reconcentrated "strong" sulfuric acid are controlled, the flow rates of the feed "weak" nitric acid and of the "strong" sulfuric acid and the ratio between these two streams, the preferred locations for measurements of these process parameters being shown in the drawings by the designations P. The energy input is controlled through the steam flow rates to the nitric acid vaporizer 20 and the reboiler 54, the split of energy between the two sources of heat application being established in accordance with the split in the nitric acid feed between the two streams in the pipes 22 and 26. The process operation is monitored by recording temperatures at various locations in the sulfuric acid loop, the preferred locations for these temperature measurements being shown in the drawings by the designations T. Excessive entrainment of nitric acid in the spent sulfuric acid is noted through increased carry-over of nitric acid in the equilibrium flash concentrator and through increased caustic requirements in the condenser 68 of the cooling water loop.

Figure 2 shows an alternative apparatus for implementation of the invention in which the sulfuric acid is reconcentrated by evaporative cooling using air, in place of the vacuum flash concentrator of the apparatus of Figure 1. The same references are used for the same components wherever that is possible. In this apparatus the boiling spent sulfuric acid discharged via pipe 58 from the bottom of the column 10 is fed to the top of a packed acid cooling tower 92, where it is concentrated through evaporative cooling by a countercurrent stream of air delivered via pipe 94 by a fan 96. From the bottom of the cooling tower the reconcentrated "strong" sulfuric acid flows to the sulfuric acid pump tank 64 from where it is recycled to the process as before. A small scrubber 98 using process water and some caustic input via pipe 82 is used to condense any traces of acid vapors received from the acid cooling tower 92 via pipe 100, since discharge of even small amounts of acid would be objectionable in a plant environment. Compared to the vacuum flash concentration process this evaporative cooling and concentration process rejects energy directly to the ambient air without passing through the secondary cooling water loop. Thus the cooling water loop to the condenser of the equilibrium flash concentrator is completely eliminated and cooling water is required only for the nitric acid condenser 36. Due to the smaller circulation rate of the sulfuric acid compared to that of the cooling water, a much smaller fan 96 will be sufficient to achieve evaporative cooling and concentration of the spent sulfuric acid. Control of the strength of the reconcentrated "strong" sulfuric acid is achieved through flow control of the cooling air. However, cooling water requirements are substantially reduced and the costs for vacuum equipment and a water cooling tower are saved. Operation of the nitric acid concentration column and the nitric and sulfuric acid circulation rates essentially remain unaffected.

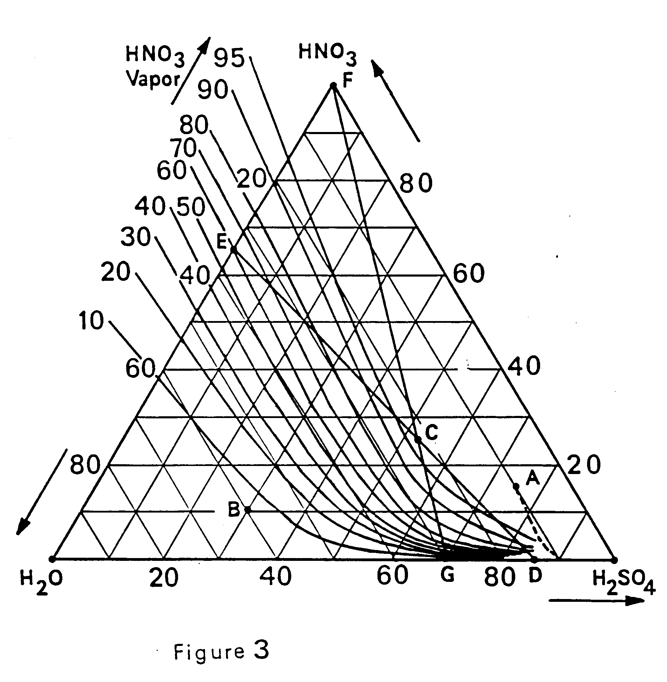

The function of the sulfuric acid in nitric acid concentration is best explained by referring to Figure 3, which represents the ternary system consisting of nitric acid, sulfuric acid and water in a triangular diagram. Similar diagrams for other dehydrating agents have been published in the literature. Figure 3 is drawn based on data published by S. R. M. Ellis and J. M. Thwaites (J. Appl. Chem., Volume 7, April 1957). The lines shown in Figure 3 give the weight percent of nitric acid in the vapor space above the mixed acid at its atmospheric boiling point, the balance being mostly water. Sulfuric acid has an extremely low partial pressure except when its concentration approaches 97% H₂SO₄, where sulfuric acid forms an azeotrope. Except at very high strengths sulfuric acid will therefore be present only in trace amounts in the vapor space. Point A in Figure 3 represents a mixture of 75% H₂SO₄, 15% HNO₃ and 10% H₂O. If the mixed acid represented by this point is distilled in a batch distillation process, strong nitric acid corresponding to the vapor composition in equilibrium with the mixed acid in the distillation apparatus will initially be produced. The strength of the nitric acid produced is well above the weight fraction of the nitric acid in the liquid phase on a sulfuric acid free basis. As nitric acid is removed from the mixed acid through distillation, its weight fraction in the liquid phase will decrease resulting in the gradual decline in the strength of the nitric acid produced until recovery by batch distillation becomes uneconomical. A qualitative distillation trajectory starting from point A is shown through the dashed line in Figure 3. However, when starting a batch distillation from the conditions set by point A, the concentration of the nitric acid in the vapor space always stays above that in the liquid phase on a sulfuric acid free basis. The presence of sulfuric acid in the mixed acid has in effect eliminated the nitric acid azeotrope. For the mixed acid represented by point B in Figure 3 (30% H₂SO₄, 10% HNO₃, 60% H₂O) the weight fraction of nitric acid in the vapor space is below that of the nitric acid in the mixed acid on a sulfuric acid free basis. This shows, as stated above, that a certain quantity of sulfuric acid must be present in the mixed acid in order to break the nitric acid azeotrope.

A good measure of the capacity of sulfuric acid to break the nitric acid azeotrope is the relative volatility defined on a sulfuric acid free basis as 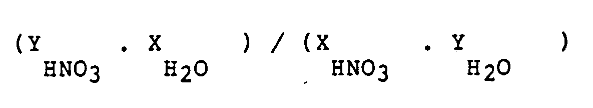
where Y is the mole fraction in the vapor space and X is the mole fraction in the liquid phase. Data reported by Ellis and Thwaites show a relative volatility of around 10 for sulfuric acid of 70% H₂SO₄ and a relative volatility of less than 1 for sulfuric acid of 38% H₂SO₄, both values applying to the case of low nitric acid weight fractions in the mixed acid. Relative volatility increases with sulfuric acid strength and also with the weight fraction of nitric acid. This suggests therefore that for the mixed acid employed in section 3 of the column, which is mixed at junction 28 by blending feed nitric acid and reconcentrated sulfuric acid, the ratio of the two acid flows must be adjusted to ensure that the nitric acid content of the vapor above this mix is sufficiently high. Point C in Figure 3 represents an example of a suitable mixed acid composition but many other mixed acid compositions are suitable as long as the vapor above the mixed acid is rich in nitric acid and as long as the mixed acid at junction 28 can be prepared by mixing reconcentrated "strong" sulfuric acid and feed "weak" nitric acid.

Some important process features of the nitric acid concentration in packed columns can further be elucidated referring again to Figure 3. A mixed acid of composition C can be prepared by mixing sulfuric acid of composition D and nitric acid of composition E. All mixed acids which can be prepared by mixing acids D and E in various mass ratios fall on a straight line connecting these two points. Composition C is obtained by mixing the two acids according to the inverse lever arm rule such that nitric acid and sulfuric acid are combined in a mass ratio corresponding to the ratio of the distances C-D (for nitric acid) and C-E (for sulfuric acid). The total mass of the product acids, "strong" nitric acid of composition close to 100% HNO₃ and spent sulfuric acid of about 70% H₂SO₄, must be equal to the mass of the feed acids entering the column. Hence, if the two product acids are mixed, a mixed acid of composition C is again obtained. The two product acids are produced in a mass ratio corresponding to the ratio of the distances C-F (for the spent sulfuric acid) and C-G (for the "strong" nitric acid). The quantity of sulfuric acid required for the concentration of nitric acid can be obtained from the intercepts of the lines F-G and D-E using the inverse lever arm rule. The effects of changes in nitric acid strength and in sulfuric acid strength can easily be obtained visually from Figure 3. For example, reducing the strength of the reconcentrated sulfuric acid, which means moving point D towards point G, increases the required feed rate of the "strong" sulfuric acid as well as the quantity of spent sulfuric acid produced.

The foregoing description of processes of the invention has been presented with reference to sulfuric acid as the dehydrating agent, but can also be implemented with similar advantages by use of other dehydrating agents, such as magnesium nitrate, calcium nitrate or phosphoric acid, in logically equivalent fashion. For each dehydrating agent it is necessary to select a suitable strength, a suitable circulation rate and a split of the dehydrating agent into suitable portions in relation to the "weak" nitric acid feed rate, and it will be necessary to select the required proper operating temperatures and pressures, as will be apparent to those skilled in the art.

It may be noted that the reboiler 54 can be used as the energy source for start-up purposes.

In alternative versions of the processes illustrated by Figures 1 and 2, the reboiler 54 at the bottom of the column 10 is replaced by a "live steam" injector 102, shown in broken lines in Figures 1 and 2. Because of the "live steam" injection an increase is required in the sulfuric acid circulation rate but this live steam does not contribute significantly to the energy requirements of the nitric acid concentration process, since this steam will flash in the vacuum concentrator 60, after it has stripped the spent sulfuric acid free of nitric acid in column 10. Some energy will therefore have to be supplied elsewhere in the sulfuric acid loop, for example through a reboiler in the vacuum flash concentrator. The advantage of supplying the energy at that alternative location is that low pressure steam (which may be waste steam) can be used; the increase in the energy requirements of this process option, which comes from the "live steam" injection, may therefore be offset by the savings associated with the elimination of high pressure steam, particularly in case of small plants.

In another modification of the processes of the invention it is possible to inject into the sulfuric acid loop a slip stream of sulfuric acid from another source which may also contain some nitric acid or a stream of strong sulfuric acid that is incidentially available, at the same time purging an equivalent amount of the reconcentrated "strong" sulfuric acid to maintain the necessary inventory. Such a scheme is of advantage if, for example, a waste stream of spent sulfuric acid from a nitration process is available and is to be denitrated. In case such an acid is to be blended into the process its feed location into the column will be dictated by its composition, in that it may be possible to use it to form the acid mixture injected by the nozzles 30 into section 3, or instead it may be necessary to introduce it into section 5 to be reboiled.

It will be noted that the volume of reconcentrated sulfuric acid used in my process is sufficiently large for it to be capable of absorbing all of the energy carried by the water vapor that is vaporized with the "weak" nitric acid in the column and in the nitric acid vaporizer, and it therefore constitutes the principal heat sink of the process. On the other hand, the inventory of sulfuric acid required is relatively small in that its quantity only needs to be sufficient to wet the packing in the column, to fill all the piping, and to ensure that there is an adequate level in the sulfuric acid pump tank 64. The mass ratio of the strong nitric produced to that of the circulation rate of the "strong" sulfuric acid in circulation should be between about 7:1 and 15:1, the ratio depending of course upon the feed "weak" nitric acid strength. As a specific example, when using "strong" sulfuric acid of 75.2% H₂SO₄ as the dehydrating agent as described and using "weak" nitric acid of 64% strength the mass ratio will be about 10:1. The relatively low strength of the sulfuric acid used in the process and the relatively small variation in its strength within the sulfuric acid loop of only about 3.2 percentage points also minimizes losses of sulfuric acid from the loop in the form of vapor. This is due to the low partial pressure of sulfuric acid at the acid strengths used in the process. The flow rate of the sulfuric acid is matched to the energy input as described above and, for example, for each kilogram of "strong" nitric acid of produced the pump 48 must circulate about 7 to 15 kilograms of reconcentrated "strong" sulfuric acid, depending on the strength of the "weak" feed nitric acid. Low pressure steam can be employed in nitric acid vaporizer 20, since its heating temperature needs only to be somewhat higher than the boiling point of the feed "weak" nitric acid. If live steam is used in the bottom of column 10 it can be supplied at any convenient temperature, and superheating of this steam is not required.

## Claims

1. A process for an integrated concentration of nitric acid in a column by use of a dehydrating agent and reconcentration of the dehydrating agent, the process comprising the steps of:
a) splitting a feed stream of an aqueous solution of weak nitric acid to be concentrated to result in a larger fraction and a smaller fraction;
b) vaporizing at least the larger nitric acid fraction to result in a larger nitric acid vapor fraction;
c) directly contacting the larger nitric acid vapor fraction with a first portion of the dehydrating agent in a column to bind the water therefrom and result in a concentrated vapor stream of nitric acid and a diluted stream of said first portion of the dehydrating agent;
d) mixing the smaller fraction of the weak nitric acid and a second portion of the dehydrating agent;
e) contacting the concentrated vapor stream of nitric acid in the column with the mixture resulting from step (d) to result in a more concentrated vapor stream of nitric acid and a diluted stream of said second portion of the dehydrating agent;
f) condensing the more concentrated nitric acid vapor stream from step (e) to obtain a condensed more concentrated nitric acid;
g) boiling the diluted streams of said first and second portions of the dehydrating agent from steps (c) and (e) to remove nitric acid therefrom and to produce spent dehydrating agent; and
h) collecting, reconcentrating and recirculating the spent dehydrating agent of step (g) for use in steps (c) and (d).

2. A process as claimed in claim 1, including the further step of:
i) contacting the more concentrated vapor stream nitric acid from step (e) with a third portion of the dehydrating agent to remove part of residual water vapor from said more concentrated vapor stream of nitric acid to result in a still more concentrated vapor stream of nitric acid.

3. A process as claimed in claim 2, including the further step of:
j) refluxing the condensed more concentrated nitric acid from step (f) to contact said still more concentrated vapor stream of nitric acid of step (i) to collect part of residual water vapor from the still more concentrated vapor stream of nitric acid and of part of the third portion of the dehydrating agent carried in the still more concentrated vapor stream of nitric acid.

4. A process as claimed in claim 2 or 3, wherein at least steps (c), (e), (g) and (i) are effected in a single column and the reconcentrated dehydrating agent is recirculated to the column in three portions at three separate locations to be used in steps (c), (e) and (i).

5. A process as claimed in any one of claims 1 to 4, wherein the spent dehydrating agent of step (g) is reconcentrated in a vacuum equilibrium flash concentrator.

6. A process as claimed in claim 5, and including injecting an alkaline solution into a condensed water loop to neutralize remaining nitric acid and sulfuric acid that enter the water loop through carry-over in the vacuum equilibrium flash concentrator.

7. A process as claimed in any one of claims 1 to 4, wherein the spent dehydrating agent of step (g) is reconcentrated by extraction of water vapor therefrom in an evaporative cooler concentrator using air.

8. A process as claimed in claim 7, wherein the evaporative cooler concentrator includes a scrubber, and the water vapor extracted from the reconcentrated dehydrating agent is neutralized by injection of an alkaline solution into the scrubber.

9. A process as claimed in any one of claims 1 to 8, wherein the dehydrating agent is an aqueous solution of sulfuric acid or of magnesium nitrate.

10. A process as claimed in claim 9, wherein the dehydrating agent is sulfuric acid and the strength of the reconcentrated sulfuric acid from step (h) is between 71% and 79% by weight.

11. A process as claimed in claim 10, wherein the strength of the reconcentrated sulfuric acid is about 75.2% by weight.

12. A process as claimed in any one of claims 9 to 11, wherein the second portion of the dehydrating agent of steps (d) and (e) includes waste sulfuric acid containing nitric acid.

13. A process as claimed in any one of claims 1 to 12, wherein the dehydrating agent is sulfuric acid, wherein part of the reconcentrated sulfuric acid from step (h) is mixed with the spent sulfuric acid from step (g), and wherein this mixture of reconcentrated and spent sulfuric acid is transferred through a sulfuric acid transfer line to a vacuum equilibrium flash concentrator such that flashing in the sulfuric acid transfer line is avoided.

14. A process as claimed in any preceding claim, wherein the feed stream of step (a) is preheated by the condensed more concentrated nitric acid vapor of step (f).

15. A process as claimed in any preceding claim, wherein the larger vapor fraction of step (a) is vaporized by passing through a vaporizer using low pressure steam as the heat source.

16. A process as claimed in any preceding claim, wherein the boiling of the diluted stream of the first and second portions of the dehydrating agent in step (g) is effected by use of a high pressure steam reboiler in the column.

17. A process as claimed in any preceding claim, wherein the energy input to a reboiler boiling the dehydrating agent in step (g) is controlled.

18. A process as claimed in any one of claims 1 to 15, wherein live steam is injected into the bottom of the column to produce the boiling of step (g).

19. A process as claimed in any preceding claim, wherein the dehydrating agent is sulfuric acid and wherein the proportions of the sulfuric acid and the smaller fraction of feed nitric acid in step (d) are such that nitric acid vapor in equilibrium with the resulting mixture has a strength of 85% to 96% HNO₃.

20. A process as claimed in any preceding claim, wherein energy is supplied through boiling tubes in a dehydrating agent loop in which the dehydrating agent is reconcentrated.

21. A process as claimed in any preceding claim, wherein the dehydrating agent is sulfuric acid and wherein the mass ratio of the condensed more concentrated nitric acid produced in step (f) to a mass circulation rate of the dehydrating agent is between 7:1 and 15:1.

## Patentansprüche

1. Verfahren zur integrierten Konzentrierung von Salpetersäure in einer Kolonne unter Verwendung eines Entwässerungsmittels und erneuter Konzentrierung des Entwässerungsmittels, wobei das Verfahren die folgenden Schritte umfaßt:
a) Aufteilen eines Zufuhrstroms einer wässrigen Lösung zu konzentrierender, schwacher Salpetersäure, was einen größeren Anteil und einen kleineren Anteil ergibt;
b) Verdampfen mindestens des größeren Salpetersäureanteils, was einen größeren Anteil Salpetersäuredampf ergibt;
c) Den größeren Anteil Salpetersäuredampf mit einem ersten Teil des Entwässerungsmittels in einer Kolonne unmittelbar in Berührung zu bringen, um das Wasser davon zu binden, was zu einem Strom konzentrierten Salpetersäuredampfs und einem verdünnten Strom des besagten ersten Teils des Entwässerungsmittels führt;
d) Mischen des kleineren Anteils der schwachen Salpetersäure und eines zweiten Teils des Entwässerungsmittels;
e) Den Strom konzentrierten Salpetersäuredampfs in der Kolonne mit der Mischung aus Schritt (d) in Berührung zu bringen, was zu einem Strom konzentrierteren Salpetersäuredampfs und einem verdünnten Strom des besagten zweiten Teils des Entwässerungsmittels führt; f) Kondensieren des Stroms konzentrierteren Salpetersäuredampfs aus Schritt (e), um eine kondensierte, konzentriertere Salpetersäure zu erhalten;
g) Sieden der verdünnten Ströme besagter erster und zweiter Teile des Entwässerungsmittels aus den Schritten (c) und (e), um Salpetersäure daraus zu entfernen und verbrauchtes Entwässerungsmittel zu erzeugen; und
h) Sammeln, erneutes Konzentrieren und Zurückführen des verbrauchten Entwässerungsmittels aus Schritt (g) zur Verwendung in den Schritten (c) und (d).

2. Verfahren nach Anspruch 1, gekennzeichnet durch den weiteren Schritt:
(i) Den Strom konzentrierteren Salpetersäuredampfs aus Schritt (e) mit einem dritten Teil des Entwässerungsmittels in Berührung zu bringen, um einen Teil des Restwasserdampfs aus besagtem Strom konzentrierteren Salpetersäuredampfs zu entfernen, was zu einem noch konzentrierteren Strom Salpetersäuredampfs führt.

3. Verfahren nach Anspruch 2, gekennzeichnet durch den weiteren Schritt:
(j) Zurückspeisen der kondensierten, konzentrierteren Salpetersäure aus Schritt (f), um sie mit besagtem Strom noch konzentrierteren Salpetersäuredampfs aus Schritt (i) in Berührung zu bringen, um einen Teil der Wasserdampf-Restmenge aus dem Strom konzentrierteren Salpetersäuredampfs und eines Teils des dritten Teils des in besagtem Strom konzentrierteren Salpetersäuredampfs mitgeführten Entwässerungsmittels aufzufangen.

4. Verfahren nach Anspruch 2 oder 3, dadurch gekennzeichnet, daß zumindest die Schritte (c), (e), (g) und (i) in einer einzigen Kolonne durchgeführt und das erneut konzentrierte Entwässerungsmittel der Säule in drei Anteilen an drei getrennten Stellen zur Verwendung in den Schritten (c), (e) und (i) zugeführt wird.

5. Verfahren nach einem der Ansprüche 1 bis 4, dadurch gekennzeichnet, daß das verbrauchte Entwässerungsmittel aus Schritt (g) in einem Vakuum-Gleichgewichts-Flash-Konzentrator von neuem konzentriert wird.

6. Verfahren nach Anspruch 5, dadurch gekennzeichnet, daß eine alkalische Lösung in einen Kondenswasserkreislauf eingedüst wird, um restliche Salpetersäure und Schwefelsäure zu neutralisieren, die durch Hinüberreißen im Vakuum-Gleichgewichts-Flash-Konzentrator in den Wasserkreislauf gelangen.

7. Verfahren nach einem der Ansprüche 1 bis 4, dadurch gekennzeichnet, daß das verbrauchte Entwässerungsmittel aus Schritt (g) durch Extraktion von Wasserdampf daraus in einem Verdunstungskühler-Konzentrator unter Verwendung von Luft von neuem konzentriert wird.

8. Verfahren nach Anspruch 7, dadurch gekennzeichnet, daß der Verdunstungskühler-Konzentrator einen Wäscher einschließt, und daß der von dem erneut konzentrierten Entwässerungsmittel extrahierte Wasserdampf durch Eindüsung einer alkalischen Lösung in den Wäscher neutralisiert wird.

9. Verfahren nach einem der Ansprüche 1 bis 8, dadurch gekennzeichnet, daß das Entwässerungsmittel eine wässrige Lösung von Schwefelsäure oder Magnesiumnitrat ist.

10. Verfahren nach Anspruch 9, dadurch gekennzeichnet, daß das Entwässerungsmittel Schwefelsäure ist und die Stärke der erneut konzentrierten Schwefelsäure aus Schritt (h) zwischen 71 und 79 Gew.% liegt.

11. Verfahren nach Anspruch 10, dadurch gekennzeichnet, daß die Stärke der erneut konzentrierten Schwefelsäure etwa 75,2 Gew.% beträgt.

12. Verfahren nach einem der Ansprüche 9 bis 11, dadurch gekennzeichnet, daß der zweite Teil des Entwässerungsmittels aus den Schritten (d) und (e) Abfallschwefelsäure einschließt, die Salpetersäure enthält.

13. Verfahren nach einem der Ansprüche 1 bis 12, dadurch gekennzeichnet, daß das Entwässerungsmittel Schwefelsäure ist, daß ein Teil der erneut konzentrierten Schwefelsäure aus Schritt (h) mit der verbrauchten Schwefelsäure aus Schritt (g) gemischt wird, und daß diese Mischung aus erneut konzentrierter und verbrauchter Schwefelsäure über eine Schwefelsäure-Übertragungsleitung zu einem Vakuum-Gleichgewichts-Flash- Konzentrator übertragen wird, so daß ein Flashverdampfen in der Schwefelsäure-Übertragungsleitung vermieden wird.

14. Verfahren nach einem der vorangehenden Ansprüche, dadurch gekennzeichnet, daß der Zugabestrom des Schritts (a) durch den kondensierten, konzentrierteren Salpetersäuredampf des Schritts (f) vorgewärmt wird.

15. Verfahren nach einem der vorangehenden Ansprüche, dadurch gekennzeichnet, daß der größere Anteil des Dampfs aus Schritt (a) durch Durchgang durch einen Verdampfer verdampft wird, wobei Niederdruckdampf als Wärmequelle eingesetzt wird.

16. Verfahren nach einem der vorangehenden Ansprüche, dadurch gekennzeichnet, daß das Sieden des verdünnten Stroms des ersten und zweiten Teils des Entwässerungsmittels in Schritt (g) durch Verwendung eines Hochdruckdampf-Aufheizers in der Kolonne ausgeführt wird.

17. Verfahren nach einem der vorangehenden Ansprüche, dadurch gekennzeichnet, daß die Energiezufuhr zu einem Aufheizer, der das Entwässerungsmittel in Schritt (g) zum Sieden bringt, gesteuert wird.

18. Verfahren nach einem der Ansprüche 1 bis 15, dadurch gekennzeichnet, daß Frischdampf in den Fuß der Kolonne eingedüst wird, um das Sieden in Schritt (g) zu bewirken.

19. Verfahren nach einem der vorangehenden Ansprüche, dadurch gekennzeichnet, daß das Entwässerungsmittel Schwefelsäure ist und daß die Verhältnisse der Schwefelsäure und des kleineren Anteils der zugeführten Salpetersäure in Schritt (d) so sind, daß der Salpetersäuredampf im Gleichgewicht mit der sich ergebenden Mischung eine Stärke von 85% bis 96% HNO₃ hat.

20. Verfahren nach einem der vorangehenden Ansprüche, dadurch gekennzeichnet, daß durch Siederohre in einem Entwässerungsmittelkreislauf Energie geliefert wird, in welchem das Entwässerungsmittel erneut konzentriert wird.

21. Verfahren nach einem der vorangehenden Ansprüche, dadurch gekennzeichnet, daß das Entwässerungsmittel Schwefelsäure ist und daß das Massenverhältnis der in Schritt (f) erzeugten, kondensierten, konzentrierteren Salpetersäure zu einem Massenumlaufstrom des Entwässerungsmittels zwischen 7:1 und 15:1 liegt.

## Revendications

1. Procédé pour une concentration intégrée d'acide nitrique dans une colonne en utilisant un agent de déshydratation et en reconcentrant l'agent de déshydratation, le procédé comprenant les stades suivants :
a) séparer un courant arrivant d'une solution aqueuse d'acide nitrique faible à concentrer pour obtenir une fraction plus grande et une fraction plus petite;
b) vaporiser au moins la fraction plus grande d'acide nitrique pour obtenir une fraction de vapeur d'acide nitrique plus grande;
c) mettre directement en contact la fraction de vapeur d'acide nitrique plus grande avec une première portion de l'agent de déshydratation dans une colonne pour en lier l'eau et obtenir un courant de vapeur d'acide nitrique concentré et un courant dilué de cette première portion de l'agent de déshydratation;
d) mélanger la fraction plus petite de l'acide nitrique faible et une seconde portion de l'agent de déshydratation;
e) mettre en contact le courant de vapeur d'acide nitrique concentré dans la colonne avec le mélange résultant du stade (d) pour obtenir un courant de vapeur d'acide nitrique plus concentré et un courant dilué de la deuxième portion de l'agent de déshydratation;
f) condenser le courant de vapeur d'acide nitrique plus concentré en provenance du stade (e) pour obtenir un acide nitrique plus concentré condensé;
g) amener à ébullition les courants dilués de la première et de la deuxième portion de l'agent de déshydratation en provenance des stades (c) et (e) pour en enlever l'acide nitrique et pour produire un agent de déshydratation épuisé; et
h) recueillir, reconcentrer et recycler l'agent de déshydratation épuisé du stade (g) pour l'utiliser dans les stades (c) et (d).

2. Procédé selon la revendication 1, comportant le stade supplémentaire suivant :
i) mettre en contact le courant de vapeur d'acide nitrique plus concentré en provenance du stade (e) avec une troisième portion de l'agent de déshydratation pour enlever une partie de la vapeur d'eau résiduelle de ce courant de vapeur d'acide nitrique plus concentré pour obtenir un courant de vapeur d'acide nitrique encore plus concentré.

3. Procédé selon la revendication 2, comportant le stade supplémentaire suivant :
j) retourner l'acide nitrique plus concentré condensé provenant du stade (f) pour l'amener en contact avec le courant de vapeur d'acide nitrique encore plus concentré du stade (i) pour recueillir une partie de la vapeur d'eau résiduelle en provenance du courant de vapeur d'acide nitrique encore plus concentré et d'une partie de la troisième portion de l'agent de déshydratation entraîné dans le courant de vapeur d'acide nitrique encore plus concentré.

4. Procédé selon la revendication 2 ou la revendication 3, dans lequel au moins les stades (c), (e), (g) et (i) sont effectués dans une seule colonne et dans lequel l'agent déshydratant reconcentré est recyclé à la colonne en trois portions en trois emplacements séparés pour être utilisé dans les stades (c), (e) et (i).

5. Procédé selon l'une quelconque des revendications 1 à 4, dans lequel l'agent de déshydratation épuisé du stade (g) est reconcentré dans un concentrateur flash d'équilibre sous vide.

6. Procédé selon la revendication 5, dans lequel on injecte une solution alcaline dans une boucle d'eau condensée pour neutraliser l'acide nitrique et l'acide sulfurique résiduels qui pénètrent dans la boucle d'eau en étant entraînés dans le concentrateur flash d'équilibre sous vide.

7. Procédé selon l'une quelconque des revendications 1 à 4, dans lequel l'agent déshydratant épuisé du stade (g) est reconcentré en en extrayant la vapeur d'eau dans un concentrateur refroidisseur par évaporation en utilisant de l'air.

8. Procédé selon la revendication 7, dans lequel le concentrateur refroidisseur par évaporation comporte une section de lavage et dans lequel la vapeur d'eau extraite de l'agent de déshydratation reconcentré est neutralisée par injection d'une solution alcaline dans la section de lavage.

9. Procédé selon l'une quelconque des revendications 1 à 8, dans lequel l'agent de déshydratation est une solution aqueuse d'acide sulfurique ou de nitrate de magnésium.

10. Procédé selon la revendication 9, dans lequel l'agent de déshydratation est l'acide sulfurique et la force de l'acide sulfurique reconcentré en provenance du stade (h) est comprise entre 71 et 79% en poids.

11. Procédé selon la revendication 10, dans lequel la force de l'acide sulfurique reconcentré est d'environ 75,2% en poids.

12. Procédé selon l'une quelconque des revendications 9 à 11, dans lequel la deuxième portion de l'agent de déshydratation des stades (d) et (e) contient de l'acide sulfurique perdu contenant de l'acide nitrique.

13. Procédé selon l'une quelconque des revendications 1 à 12, dans lequel l'agent de déshydratation est l'acide sulfurique, dans lequel une partie de l'acide sulfurique reconcentré en provenance du stade (h) est mélangée avec l'acide sulfurique épuisé en provenance du stade (g), et dans lequel ce mélange d'acide sulfurique reconcentré et d'acide sulfurique épuisé est transféré par une canalisation de transfert d'acide sulfurique à un concentrateur flash d'équilibre sous vide, de telle sorte qu'on évite toute évaporation dans la canalisation de transfert d'acide sulfurique.

14. Procédé selon l'une quelconque des revendications précédentes, dans lequel le courant arrivant du stade (a) est préchauffé dans la vapeur d'acide nitrique plus concentrée condensée du stade (f).

15. Procédé selon l'une quelconque des revendications précédentes, dans lequel la fraction de vapeur plus grande du stade (a) est vaporisée en passant à travers un dispositif de vaporisation utilisant comme source de chaleur de la vapeur basse pression.

16. Procédé selon l'une quelconque des revendications précédentes, dans lequel l'ébullition du courant dilué des première et deuxième portions de l'agent de déshydratation dans le stade (g) est réalisée en utilisant un rebouilleur à vapeur haute pression dans la colonne.

17. Procédé selon l'une quelconque des revendications précédentes, dans lequel l'apport d'énergie au rebouilleur faisant bouillir l'agent de déshydratation au stade (g) est contrôlé.

18. Procédé selon l'une quelconque des revendications 1 à 15, dans lequel on injecte de la vapeur vive dans le bas de la colonne pour produire l'ébullition du stade (g).

19. Procédé selon l'une des revendications précédentes, dans lequel l'agent de déshydratation est l'acide sulfurique et dans lequel les proportions de l'acide sulfurique et de la fraction plus petite d'acide nitrique amenée au stade (d) sont telles que la vapeur d'acide nitrique en équilibre avec le mélange résultant a une force de 85 à 96% HNO₃.

20. Procédé selon l'une des revendications précédentes, dans lequel l'énergie est apportée par l'intermédiaire de tubes d'ébullition dans une boucle d'agent de déshydratation, dans laquelle l'agent de déshydratation est reconcentré.

21. Procédé selon l'une des revendications précédentes, dans lequel l'agent de déshydratation est l'acide sulfurique et dans lequel le rapport en masse de l'acide nitrique plus concentré condensé produit au stade (f) au débit de circulation massique de l'agent de déshydratation est compris entre 7:1 et 15:1.
